# EUROPEAN PATENT APPLICATION

(11) **EP 3 673 991 A1**
(43) Date of publication of application: **01.07.2020**
(21) Application number: 18848829.0
(22) Date of filing: 12.07.2018
(51) Int. Cl.: B01J 20/285, D01F 11/06, B01D 39/16, C02F 1/28, C02F 101/20

(54) **FIBROUS SORBENT**

(30) Priority: 23.08.2017 RU 2017129869
(71) Applicant: Electrophor, Inc., Woodmere NY 11598 (US)
(72) Inventor: VASIL'YEVA, Evgeniya Sergeyevna, St.Petersburg, 192236 (RU); REMIZOVA, Iuliia Anatolievna, pos. Kudrovo Leningradskaya obl. 188691 (RU); KAZAKEVICH, Yuriy Evgenievich, St. Petersburg, 198261 (RU); MITILINEOS, Aleksandr Gennadievich, St. Petersburg 195220 (RU)
(74) Representative: Danubia Patent & Law Office LLC
(86) International application number: PCT/RU2018/000459
(87) International publication number: WO 2019/039966

(57) **Abstract**

Fibrous polyampholytic sorbent based on PAN, modified with an aliphatic di-, oligo-or polyamine, is a polymer matrix of filaments with an outer ion-exchange layer of interlinked amide cross-links of three-dimensional carboxy-N,N'-polyacrylamido-N,N'-di(iminoethane) structures, the proportion of which is not less than 50% and not more than 90% of the total mass of the filament and which contain repeated sorption volume chelating centers from two amino groups and one carboxyl group.

The object of the invention and the technical effect attained by the invention is to develop the new persistent polyampholytic sorbent with regular and ordered structure, with increased sorption ability to heavy metal ions, with high chelating properties and, at the same time, selective for sorption of calcium and magnesium ions, with a high content of anion-exchange and cation-exchange groups and a reduced degree of swelling.

## Description

### FIELD OF INVENTION

The invention relates to fibrous sorbents for removing heavy metal ions from water and water solutions.

Currently, fibrous sorbents based on modified polyacrylonitrile (hereinafter referred to as PAN) and/or its copolymers are used to remove heavy metal ions, such as chromium Cr (VI), copper Cu (II), lead Pb (II), iron Fe (II) and Fe (III) from water. The sorption of metals in such sorbents occurs due to ion exchange reactions and/or complexation of metal ions with functional sorbent groups. Sorbents known in the prior art are characterized by low sorption properties, as well as instability and fragility of complexes sorbent with metal ions, which can lead to destruction of these complexes and desorption of toxic ions into purified water. In addition, sorbents have low kinetic properties. Besides that most sorbents have high swelling capacity in water, which complicates their use in water treatment systems.

### BACKGROUND OF THE INVENTION

The fibrous ion-exchange sorbent based on PAN according to the RU Patent No. 2101306 [St. Petersburg State University of Technology and Design, IPC C08J 5/20, published on 10.01.1998, prior. 09.01.1992] meant for sorption of reagents from wastewater and ventilation exhausts is known from the state of art.

The sorbent, according to the described method, is obtained in two stages and is characterized by the following characteristics:
- exchange capacity for chromium Cr (VI) - from 3.1 to 3.8 mmol/g;
- exchange capacity of 0.1 N HCI - from 5.3 to 6.4 mmol/g;
- fiber strength - from 12.4 to 15.8 cN/tex.

The production method is in treatment of PAN in the first stage with a 10 - 90 % alkaline alkyleneamine solution at a temperature of 70 - 85 °C during 30 - 60 minutes and following washing with distilled water. In the second stage, the fiber is treated with a 10 - 30 % aqueous solution of dimethylolethylene urea (hereinafter DMEU) at a temperature of 75 - 85 °C for 45 - 60 minutes, ratio 30. Next, the obtained sorbent is washed with distilled water and dried.

As alkyleneamine can be used polyethylenepolyamine (hereinafter PEPA), tetraethylenepentamine (hereinafter TEPA) or diethylenetriamine (hereinafter DETA) for the treatment of PAN.

The disadvantage of the sorbent is the low exchange capacity. Cyclic structures formed in the sorbent structure during an additional PAN modification by DMEM inhibit the formation of chelating complexes with metal ions. From the description of the patent it is obvious that carboxyl groups and amino-containing chains are randomly located, for which cause not all carboxyl and amino groups are able to form chelating centers. Chelating centers can be formed only when carboxyl and amino groups are located in close proximity to each other. In addition, amino-containing chains formed as a result of sorbent production are represented in the form of heterogeneous structures of various length and shape, which also negatively affects the formation of chelating centers. All of the aforesaid explains the low sorption capacity (hereinafter CE) and the instability of the sorbent. In addition, toxic and mutagenic components such as DMEM and PEPA are used in the manufacture of the sorbent. It is known that DMEM has a negative effect on humans.

An anion-exchange fibrous sorbent according to the BY Patent No. 18091 [State Scientific Institution "Institute of Physical and Organic Chemistry of the National Academy of Belarus", IPC C08J 5/20, D01F 11/04, published on 28.02.2013, prior. 16.06.2011] is known from the state of the art. The sorbent based on PAN fiber is intended for air purification from acid gases and for water purification, as well as for use as a basis for subsequent modification.

The sorbent is obtained in one stage. The patent presents two variants of the production method.

According to the first variant of the production method, the PAN fiber is treated with a 40 - 80 % aqueous solution of dimethyldipropylene triamine (hereinafter DMDPTA) containing DETA, wherein the molar ratio of DETA:PAN is 0.05:1. The treatment is carried out with continuous stirring at a temperature of 115 °C for 10 to 12 hours. After the treatment is completed, the fiber is washed with water, then with a 0.5 N HCI aqueous solution, and then washed with water until a negative reaction for Cl⁻ ion. Next, the resulting sorbent is pressed and dried.

According to the second method, PAN fiber is treated with a solution of DMDPA in ethylene glycol, with the addition of DETA, the molar ratio of DETA:PAN is 0.05 : 1. Processing is carried out at a temperature of 120 °C for 5 to 9 hours. At the end of the treatment, the fiber is washed with water, then with a 0.5 N HCI water solution and then with water until a negative reaction for the Cl⁻ ion, after which it is pressed and dried. The fibrous sorbent has the following characteristics:
- the static exchange capacity (hereinafter referred to as SOE) of SOE_{NH} ranges from 1.67 to 6.17 mEq/g;
- SOE_{COOH} - from 0.13 to 0.63 mEq/g;
- swelling in water - from 0.93 to 2.95 gH₂O/g (from 93 to 295 %).

The disadvantage of the sorbent according to BY Patent No. 18091 is low value of SOE in the basic and acid groups. Moreover, the low content of carboxyl groups prevents the formation of strong chelate complexes during the sorption of heavy metal ions. It also reduces the ability of the sorbent to sorb free metal cations. In addition, high swelling rates of the sorbent in water do not imply its use under dynamic sorption conditions. Based on the low SOE values given in the patent description, it can be assumed that the dynamic sorption of the sorbent will be several times lower. In addition, ethylene glycol used in the sorbent production is a toxic substance; in this regard, the production of the sorbent is dangerous and non-ecological. The production process of the sorbent, according to the proposed methods of obtaining, is long, laborious and costly.

The fibrous sorbent according to the RU Patent No. 2368711 [State educational institution of higher education "Ufa State Aviation Technical University", IPC D01F 11/04, C08J 5/20, D01F 6/18, published on 27.09.2009, prior. 03.03.2008] is known from the state of art. The sorbent is an anion-exchange fibrous material based on PAN fiber and is intended for sorption of metal ions, in particular chromium Cr (VI) from water and aqueous solutions.

The sorbent is obtained in a two-stage method, which employs treating Nitron fiber with a 4% aqueous solution of sodium hydroxide NaOH at a temperature of 90 °C during 3 minutes, followed by fiber modification during 1.5 - 3 hours at a temperature of 95 - 100 °C in 5% water solution of dimethylformamide (hereinafter DMF) containing from 30 to 70 % of a modifying agent. The resulting fibrous sorbent is squeezed, washed with water and dried.

A mixture of diethanolamine and hexamethylenediamine (hereinafter HMDA) is used as a modifying agent. The content of HMDA in the mixture is from 10 to 30 %.

Sorbent is characterized by the following properties:
- Dynamic exchange capacity (hereinafter DOE) for chromium Cr (VI) from a solution of potassium dichromate K₂Cr₂O₇ at pH of 4.0 is 120 - 350 mg/g;
- SOE by HCI - from 1.1 to 3.0 mEq/g.

The disadvantages of the sorbent according to RU Patent No. 2368711 are low sorption ability and low DOE of the sorbent, which is a indicator of unsatisfactory working capacity of the fibrous sorbent. Values of DOE and SOE are low due to the low content of amino groups in the HMDA molecule. The sorbent structure presented in the patent description indicates the presence of long amino-containing chains and low content of carboxyl groups. This fact indicates that during the sorption of metal ions, the distribution of ions is disordered, which prevents the formation of strong chelating complexes, and therefore sorbed metal ions are able to be desorbed from the sorbent. In addition, when using the modifying agents proposed in the patent, disordered and various length chains of amidine groups are formed. This also complicates the formation of chelating complexes and reduces the sorption rate. The synthesis of the sorbent in aqueous medium at a temperature below 100°C does not allow to achieve the necessary degree of conversion due to the high energy barrier of the reaction of nucleophilic amination of nitrile groups of PAN. DMF used to obtain the sorbent, is a highly hazardous and toxic substance and has a strong irritating effect on the mucous membranes and skin and damages the liver and kidneys if ingestion. Therefore, the production of this sorbent can be attributed to harmful and dangerous.

The fibrous ion-exchange sorbent according to RU Patent No. 2531829 [LLC "Akvatoria "(RU), IPC B01D 39/16, D01F 11/04, C08J 5/20, B01J 20/26, published on 27.10.2014, prior. 29.03.2013] is designed to remove viruses from water and for sorption of metal ions. The sorbent is a fibrous ion-exchange material obtained by alkaline hydrolysis of PAN fiber in the presence of amine-containing compounds, and is characterized by the following indicators:
- anion exchange capacity - 0.9 - 3.5 mmol/g;
- cation exchange capacity - 0.9 - 3.3 mmol/g;
- SOE - 2.4 - 4.7 mmol/g;
- isoelectric point pH from 4.2 to 9.8;
- fiber thickness - 20 µm.

The patent description provides several examples of a sorbent production method. The production methods differs in the duration of the PAN fiber modification, in the composition of the modifying solution, and in the reagents concentration in the composition of the modifying solution.

The production method involves processing PAN fiber with a modifying solution with continuous stirring, as a result of which PAN fiber gets a dark red / bright orange / red-brown color. After that, the fiber is decanted and washed with water. Next, the fiber is treated several times with 0.1 M solutions of sodium hydroxide NaOH and hydrochloric acid HCI in order to remove residual reagents. The resulting fiber is washed with water and dried.

The structure of modifying solution contains aliphatic hydrocarbon fragments and at least two amino groups. And it has the following composition, depending on the variant of the production method:
- a water-based mixture of ethylenediamine (hereinafter EDA) 2.5 mol/l and sodium hydroxide NaOH 1 mol/l;
- a water-based mixture of EDA 1.5 mol/l and sodium hydroxide NaOH 1 mol/l;
- a mixture of EDA 2.5 mol/l and sodium hydroxide NaOH 0.5 mol/l based on ethylene glycol and 5% water;
- a mixture of EDA 1.5 mol/l and sodium hydroxide NaOH 0.5 mol/l based on ethylene glycol and 5% water;
- a mixture of HMDA 2.5 mol/l and sodium hydroxide NaOH 0.5 mol/l based on ethylene glycol and 5% water.

The disadvantage of the described sorbent is the low anion-exchange and cation-exchange capacities (COE not more than 4.7 mmol/g) and, as an obvious consequence, the low sorption capacity to heavy metal ions. These characteristics narrow the scope of the sorbent, in particular in flowing water treatment systems.

The sorbent according to the article "Synthesis and characteristics of novel chelate fiber containing amine and amidine groups" / Dong Hun Shin, Young Gun Ko, Ung Su Choi, Woo Nyon Kim // Polymers for advanced technologies. - 2004. - 15, pp. 459 - 4 66 based on PAN fiber, modified with EDA, meant for sorption of Cu²⁺, Ag⁺, Zn²⁺, Ni²⁺ and Pb²⁺ ions is known from the state of art.

According to the sorbent production method, the PAN fiber is pre-extracted with ethanol to remove impurities, and then dried. EDA is dried at 40°C to remove excess of water. The sorbent is obtained in a one-step way: by treating of the PAN fiber by EDA with the addition of AlCl₃ · 6H₂O while heating to 110°C for 3 hours with continuous stirring. EDA is a solvent and modificator of PAN fiber. AlCl₃ · 6H₂O is added to increase the sorption properties of the sorbent. After completion of the modification, the resulting sorbent is washed with deionized water, then with ethanol, and then dried at a temperature of 40°C. The sorbent yield is 98%.

Properties of the sorbent:
- the total CE of the sorbent is 7.8 mEq/g;
- the maximum CE for Cu²⁺ is 3.21 mmol/g at pH 3;
- the maximum CE for Ag⁺ is 3.14 mmol/g at pH 5.5 - 8;
- the maximum CE for Zn²⁺ is 2.22 mmol/g at pH 3.5 - 7;
- the maximum CE for Ni²⁺ is 1.69 mmol/g at pH 4 - 6;
- the maximum CE for Pb²⁺ is 0.93 mmol/g at pH 4 - 6.

The disadvantage of this sorbent is low sorption capacity. The sorbent is mostly anion exchanger and almost does not contain cation exchange groups, which prevent the formation of chelating complexes with metal ions. Therefore, the sorption of metal ions is carried out mainly by the formation of ionic or coordination bonds between carboxyl or amino groups, respectively. Such bonds are characterized by low strength, which as a result can lead to desorption of sorbed metal ions from the sorbent. The above mentioned also confirms that the sorbent has a loose unstable structure, because of according to the data presented in the article, individual fibers are not interconnected by intermolecular bonds. In this regard, the sorbent has an increased degree of swelling in protic and aprotic solvents. So the sorbent is not intended for use in dynamic sorption conditions, for example, in water treatment systems, due to the low efficiency of ions sorption provided by high swelling of the sorbent.

The sorbent based on modified with DETA PAN fiber according to the article "Fourier transform infrared spectroscopy study of the effect of pH on anion and cation adsorption onto poly (acrylo-amidino-diethylene-diamine") / Young Gun Ko, Ung Su Choi, Yong Sung Park, Je Wan Woo // Journal of Polymer Science: Part A: Polymer Chemistry. - 2004. - Vol. 42. - pp. 2010 - 2018 is known from the state of art. The sorbent is meant to sorption of CrO₄²⁻, PO₄³⁻, Cu²⁺, Ni²⁺, Fe²⁺ and Ag⁺ ions.

Properties of the sorbent:
- the total CE of the sorbent is 11.4 mEq/g;
- CE for CrO₄²⁻ - 5.7 mmol/g at pH 1.02;
- CE for PO₄³⁻ - 3.8 mmol/g at pH 2.89;
- CE for Ag⁺ - 5.1 mmol/g;
- CE for Cu²⁺ - 4.49 mmol/g;
- CE for Fe²⁺ - 3.76 mmol/g;
- CE for Ni²⁺ - 3.76 mmol/g.

Sorption capacity was determined as follows. The sorbent was kept in the solution containing CrO₄²⁻, PO₄³⁻, Cu²⁺, Ni²⁺, Fe²⁺, Ag⁺ ions in an amount of 10 mmol for 24 hours with periodic stirring. Then the solution of sorbed by the sorbent ions was obtained by the method of back titration, after which the composition of the sorbed ions was identified on an IR Fourier spectrometer.

Sorbent was obtained in the following way. PAN fiber was extracted with ethanol at room temperature to remove impurities and dried. DETA was dried at a temperature of 40°C to remove bound water. After that, PAN fiber (6 g) was modified with DETA (500 g) with the addition of AlCl₃ · 6H₂O (20 g) at a temperature of 80 - 170°C for 3 hours with continuous stirring. DETA is a solvent and modificator, and AlCl₃ · 6H₂O is added to increase the sorption properties of the sorbent. After completion of the modification, PAN fiber was washed with distilled water and dried at the temperature of 40°C. The modified PAN fiber was poly(acrylo-amidino diethylenediamine). The yield of the sorbent is 97.2%.

Sorption of CrO₄²⁻ and PO₄³⁻ is possible only at low and medium pH values.

The disadvantage of the sorbent described in this article is instability of the sorbent structure, solubility and high swelling in acidic and alkaline media, as well as in protic and aprotic solvents. A consequence of these disadvantages is a low sorption efficiency under the conditions of dynamic sorption of metal ions, and the inability of using the sorbent in flow water treatment systems. The basis for these conclusions is primarily the sorbent structure presented in the article. In addition, the sorbent is a mix of elementary, unconnected PAN fibers containing amidine groups. There are almost no cation exchange groups in the sorbent. From this follows, firstly, that the sorbent fibers are not connected to each other through possible intermolecular crosslinking. Secondly, during ion sorption, as described in the article, unstable ionic or hydrogen bonds are formed between heavy metal ions and amino groups. In this regard, the sorbed ion is weakly bound to the sorbent and is capable of desorption. Particularly the probability of desorption of sorbed ions from the sorbent upon supersaturation is high, which leads to ions transition from the sorbent to purified water or an water solution. Thirdly, increased swelling and, therefore, loose sorbent structure increase the risk of ions slip through the sorbent layer into purified water, as well as the risk of channel effects, which not only reduces the cleaning efficiency, but also increases the probability of uncontrolled ingress of heavy metals into the purified water and into the human body.

The sorbent based on modified with DETA PAN fiber for sorption of lead ions Pb (II), copper Cu (II), cerium Ce (IV) and chromium Cr (IV) from water and water solutions according to the article "Fabrication of chelating diethylenetriaminated PAN micro- and nanofibers for heavy metal removal"/ Majid Abdouss, Ahmad Mousavi, Shoushtari, Aminoddin Haji, Behnam Moshref // Chemical Industry and Chemical Engineering Quarterly / - 2012. - V. 18 (1). - pp. 27 - 34 is known from the state of art.

The sorbent was obtained in the following way. At the preliminary stage, PAN fiber with hardness of 3.3 dtex, consisting of 93.5% of acrylonitrile monomer and 6.5% of methacrylate copolymer, was cut into lengths of 7 cm, washed with methylene chloride CH₂Cl₂, then - with distilled water, and then dried. In the next step, the prepared PAN fiber was modified with water solution of DETA consisting of 20 ml of DETA and 40 ml of distilled water, the ratio of PAN : solution is 60 : 1. The modification was carried out with heating and continuous stirring. The optimal modification mode is temperature of 92 °C and duration of 8 hours. After this, the solution was cooled to room temperature and the fiber was decanted. Next, the fiber was washed with acetone and distilled water, and then dried.

Characteristics of the sorbent:
- CE for copper Cu (II) using copper sulfate CuSO₄ · 5H₂O - about 7 mg/g at pH 6;
- CE for lead Pb (II) using lead nitrate Pb(NO₃)₂ - about 10 mg/g at pH 6;
- CE for cerium Ce (IV) using cerium sulfate Ce(SO₄)₂ · 4H₂O - about 9 mg/g at pH 6.

The sorption capacity of the sorbent for Cu (II), Pb (II) and Ce (IV) ions was determined by method of group processing. The sorbent was placed in a container with a solution containing metal ions of known concentration. The processing time was 2 hours at the temperature of 25 °C with continuous stirring. After treatment, the number of adsorbed ions i was determined by changing the concentration of the solution. Next, the number of adsorbed ions of each metal was determined by atomic absorption spectroscopy.

The disadvantage of the sorbent described in the article is the low sorption capacities for metal ions. The synthesis in aqueous medium at a temperature less than 100 °C is the reason for this, which prevents overcoming the energy barrier during the interaction of DETA with nitrile groups of PAN. In addition, based on the analysis of the sorbent production method described in the article, as well as on the basis of the sorption properties of the sorbent, results in that the content of carboxyl groups is high, which prevails over the content of functional groups containing primary amino groups. From which it follows that the sorbent contains few anion-exchange groups responsible for the formation of complexes with metal ions and their sorption and many cation-exchange groups. For a person skilled in the art, it will be obvious that these conclusions are logical and follow from the method of preparation described in the article. The indicated ratio of amino and carboxyl groups is explained by the fact that the modification of PAN fiber is carried out with a water solution of DETA, where the proportion of DETA as modifying agent is very small. The high water content in the reaction medium precipitate hydrolysis, and DETA in this case becomes a catalyst for the hydrolysis reaction. In this connection, during the modification of PAN fiber, the predominant reaction is hydrolysis, and not the amination reaction under the action of DETA. This explains the high content of carboxyl groups. This implies a long duration of modification (according to the method described in this article is 8 hours). This is due to the fact that the main process during modification is the hydrolysis of PAN fiber, which slows down and impedes the formation of amino groups. The low temperature modification reaction is also associated with this (the optimum temperature as described is 92 ° C), but with a high duration (8 hours). This is explained by that an increase in temperature will lead to complete hydrolysis of PAN fiber. Also, the yield of the final product, the sorbent with the declared characteristics, is low due to hydrolysis as the main process during the modification reaction. In addition, according to the IR-Fourier spectra and their description given in the article, the obtained sorbent practically does not contain C=N nitrile groups, characteral for PAN, which implies that most of the PAN fibers during the modification of DETA completely reacted to the entire depth fiber. It follows that the sorbent has an amorphous loosened unstable structure with a high degree of swelling in water and water solutions. Obviously, this sorbent cannot be used in conditions of dynamic sorption. In connection with this and the foregoing, it can be argued that the amino groups in the sorbent of this structure are randomly located, and therefore, the chelating complexes formed during the sorption of metal ions will be fragile and disordered. Due to the random arrangement of functional groups, the fraction of amino and carboxyl groups available for complexation with metal ions decreases sharply. It should also be noted that the present production method is economically disadvantageous, due to the long reaction time with a low sorbent yield, which has low sorption capacities for metal ions.

The sorbent according to the RU Patent No. 2194809 [St. Petersburg State University of Technology and Design, IPC D01F 11/04, C08J 5/20, published on 20.12.2002, prior. 26.12.2000] for the selective sorption of chromium ions Cr (VI) and mercury ions Hg (I) from water with a complex salt composition is known from the state of art. The sorbent according to RU Patent No. 2194809 is selected by the Applicant as the closest analogue.

The sorbent is an ion exchange fiber based on PAN, modified by PEPA and sodium hydroxide NaOH in an organic solvent. The ratio of amino groups (basic) to carboxylic (acidic) in the sorbent is 5 : 1. The sorbent described in this patent is obtained in single-stage process, in the following way. Based on a triple acrylonitrile copolymer fiber is fixed in length as a tow and treated with 10% PEPA and 0.3% sodium hydroxide NaOH in a solvent. Ethylene glycol or glycerin are used as a solvent. The fiber processing is carried out for 85 - 95 minutes at a temperature of 150 - 160 °C. After that, the fiber is squeezed and washed with demineralized water.

The patent presents twelve examples of the sorbent obtained by the above method. Below are the characteristics of several of them:

**Table 1. Characteristics of sorbents according to RU Patent No. 2194809**

| Example | COE_{NH}, mmol/g | COE_{COOH}, mmol/g | CE_{Hg(I)}, mg/g | CE_{Cr(VI)}, mg/g | Tensible strength, cN/tex |
|---|---|---|---|---|---|
| Example 1 | 5.98 | 1.20 | 1200 | 312 | 26.0 |
| Example 2 | 5.60 | 1.12 | 1000 | 318 | 25.0 |
| Example 3 | 5.40 | 1.14 | 1000 | 316 | 23.0 |
| Example 4 | 5.52 | 1.12 | 1000 | 316 | 25.8 |

The selective sorption capacity of the sorbent according to example 1 was determined in a water solution of three salts: FeCl₃ - 5 g/l, CaCl₂ - 5 g/l and Hg₂(NO₃)₂ - 5 g/l, the sorbent weight quantity 0.25 g, module - 100. CE_{Fe3+} - 14 mg/l, CE_{Ca2+} - 14 mg/l, CE_{Hg+} - 1200 mg/l.

The selective sorption capacity of the sorbent according to example 4 was determined in a water solution of three salts: FeCl₃ - 5 g/l, CaCl₂ - 5 g/l and K₂Cr₂O₇ - 5 g/l, the sorbent weight quantity 0.25 g, module - 50. CE_{Fe3+} - 18 mg/l CE_{ca2+} - 47 mg/l; CE_{Cr6+} - 316 mg/l.

The disadvantage of the sorbent according to RU Patent No. 2194809 is low value of the anion-exchange and cation-exchange capacities, and a weak chelation ability of the sorbent. One of the reasons for these disadvantages is the use of PEPA as a PAN fiber modifier. It is known that PEPA is a mixture of ethylene polyamines, including DETA, triethylenetetramine (hereinafter, TETA), tetraethylene pentamine (hereinafter, TEPA) and their piperazine-containing analogues in various proportions. Each of these polyamines has different chain length and structure, and therefore a different amination reactivity. Therefore, as a result of the modification of PAN fiber by PEPA, the sorbent with amino-containing chains of various lengths and structures, including cyclic is formed. Amino-containing chains are random and disordered throughout the length of the fiber and uneven in content in each fiber. Each of the sorbent fibers can contain different types of amino-containing chains in different quantitative proportions. In this regard, the arrangement of carboxyl groups between amino-containing chains is also disordered. The conformational arrangement of functional groups described above prevents the formation of chelating complexes with metal ions, since spatially unevenly arranged carboxyl and amino-containing groups of various lengths and structures are not able to form a significant number of chelating centers, and therefore chelating complexes. In addition to the said above, the formation of chelating centers is negatively affected by the high degree of remoteness of the terminal amino groups from each other and from carboxyl groups. Thus, during sorption of heavy metal ions by the sorbent, only weak bonds with carboxyl groups or coordination bonds with accessible amino groups are mainly formed. The disadvantage of such sorption the fragility and instability of such bonds with ions, bond rupture can be triggered by supersaturation of the sorbent by ions, use of the sorbent under conditions of dynamic sorption, swelling, loosening and wear of the sorbent. This leads to desorption and entrainment of ions from the sorbent phase and the transition to the phase of purified water. Secondly, the low chelation ability of the sorbent sharply reduces the ability to sorb ions of most transition metals and ions of complexing metals, such as copper, lead, aluminum, thallium. In confirmation of that, the patent claims that the sorbent is capable of sorbing an extremely narrow range of heavy metal ions, notably, only chromium ions Cr⁶⁺ and mercury ions Hg⁺. This confirms the low ability of the sorbent to form chelating complexes, because of sorption of chromium and mercury ions is carried out by the formation of coordination bonds between ions and amino groups. Also, as described above, the sorbent does not have selective sorption to beneficial ions contained in water, such as calcium and magnesium ions. It is known that calcium and magnesium ions in water increase water quality and have a beneficial effect on all living organisms. With a high content of calcium and / or magnesium ions and at the same time low - chromium and / or mercury ions in water, it is possible that the free amino groups of the sorbent are oversaturated with sorbed calcium and / or magnesium ions, and therefore the sorbent will not be able to absorb chromium and / or mercury ions from water. In addition, the presence of cyclic amine complexes in the structure of the sorbent reduces the ability of the sorbent to adsorb ions, since a combination reactions are not characteristic of cyclic structures, which should be obvious to a person skilled in the art. In addition, the sorbent according to the RU Patent No. 2194809 sorbs well chromium Cr (VI) only in low pH range, abruptly reducing sorption in the neutral region. This makes the sorbent suitable for the extraction of chromium Cr (VI) from galvanic solutions, but does not allow its use for the purification of drinking water.

### SUMMARY OF THE INVENTION

The object of the invention and the technical effect attained by it is to develop the new persistent polyampholytic sorbent with increased sorption ability to heavy metal ions, characterized by high chelating properties and at the same time selectivity to calcium and magnesium ions, and having a low degree of swelling in protic and aprotic solvents.

The object and the required technical effect are attained in that the fibrous polyampholytic sorbent based on PAN, modified with an aliphatic di-, oligo- or polyamine, is a polymer matrix of filaments with an outer ion-exchange layer of interlinked amide cross-links of three-dimensional carboxy-N,N'-polyacrylamido-N,N'-di(iminoethane) structures, the proportion of which is not less than 50% and not more than 90% of the total mass of the filament and which contain repeated sorption volume chelating centers from two amino groups and one carboxyl group, wherein the ion exchange layer contains from 2 to 5 mmol/g of sorption volume chelating centers, the preferred content is from 3 to 4 mmol/g of sorption volume chelating centers, the content of anion exchange groups is from 4 to 11 mmol/g and the preferred content of anion exchange groups is from 6 to 9 mmol/g, and the content of free cation exchange groups is from 0.5 to 5.0 mmol/g and preferably is from 1.5 to 3.0 mmol/g, where the ratio of amino groups with carboxyl groups is not less than 3 : 1 and not more than 6 : 1.

### BRIEF DESCRIPTION OF THE DRAWINGS

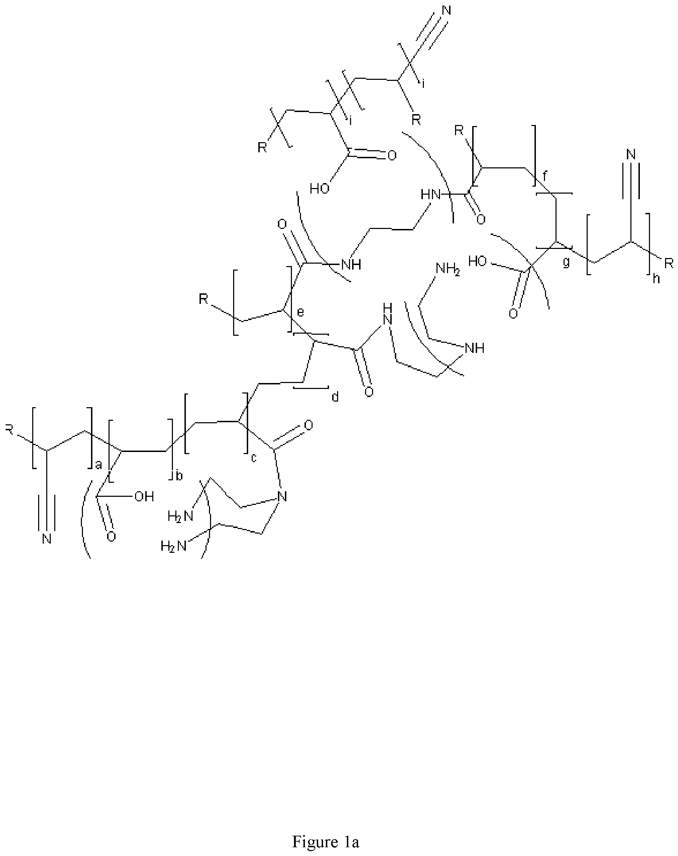

Essence of the invention is explained in greater details in the drawings in which
FIG. 1a. The structure of the sorbent filaments with an outer ion-exchange layer of interlinked amide cross-links of three-dimensional carboxy-N,N'-polyacrylamido-N,N'-di(iminoethane) structures, which contain repeated sorption volume chelating centers from two amino groups and one carboxyl group.

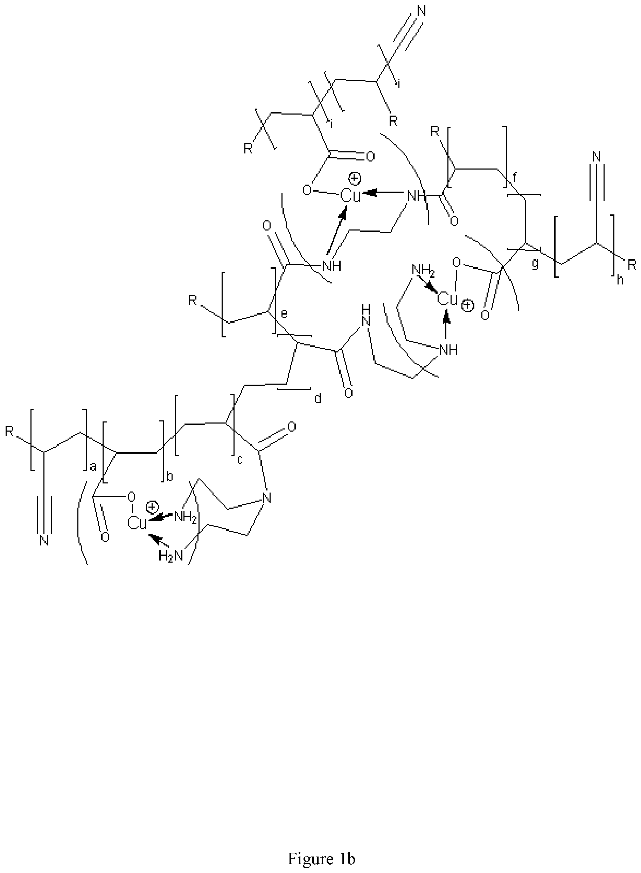

Figure 1b. The structure of the sorbent with copper ions sorbed by volume chelating centers.

### DETAILED DESCRIPTION OF THE INVENTION

The claimed fibrous polyampholytic sorbent is intended for sorption of a wide range of heavy metal ions from water, for example, chromium Cr (III) and Cr (VI), copper Cu (II), manganese Mn (II), iron Fe (II), cobalt Co (II) nickel Ni (II), zinc Zn (II), lead Pb (II), cadmium Cd (II), mercury Hg (I) and Hg (II), aluminum Al (III), cerium Ce (IV), thallium Tl (I), arsenic As (V), selenium Se (IV) and Se (VI), perchlorate ion ClO₄⁻, cyanide ion CN⁻ and others. The sorbent represents an orderly branched three-dimensional crosslinked polymer matrix of filaments. Each sorbent matrix filament consists of a shaft in the form of PAN with an external gel modified ion-exchange layer. The ion exchange layer consists of three-dimensional structures of carboxy-N,N'-polyacrylamido-N,N'-di(iminoethane), which comprise from 50 to 90% of the total filament mass. Moreover, the three-dimensional structures of carboxy-N,N'-polyacrylamido-N,N'-di(iminoethane) contain regularly located carboxyl groups with short ordered amino-containing chains. Amino-containing chains are represented by units of N-{2-[(2-aminoethyl)amino] ethyl}-polyacrylamide and N,N-bis(2-aminoethyl) polyacrylamide contained in a ratio of 2 : 1 to 4 : 1, respectively. The units of N-{2-[(2-aminoethyl)amino]ethyl}-polyacrylamide and N,N-bis(2-aminoethyl)-polyacrylamide are located both in the thickness of the ion-exchange layer, i. e. they form this layer, and on its surface. In this case, carboxyl groups both in the layer and on its surface alternate orderly with amino-containing chains. In addition, with the help of carboxy-N,N'-polyacrylamido-N,N'-di(iminoethane) structures formed by separate terminal amino groups and carboxyl groups, all filaments are linked to each other by strong covalent intermolecular amide crosslinking. The structures of carboxy-N,N'-polyacrylamido-N,N'-di(iminoethane) contain regularly repeated sorption volume chelating centers formed by two amino groups and one carboxyl group. The primary and secondary amino groups of the three-dimensional structures of carboxy-N,N'-polyacrylamido-N,N'-di(iminoethane) crosslinking filaments between themselves and the amino groups of N-{2-[(2-aminoethyl)amino]ethyl}-polyacrylamide and N,N-bis(2-aminoethyl)-polyacrylamide can be the source of amino groups formed volume chelating centers. Sorption volume chelating centers are formed between any two amino groups located in close proximity and one carboxyl group. In addition, volume chelating centers are formed between amino groups and carboxyl groups located both in the central shaft and in the outer layer. The ion exchange layer of the filament contains from 2 to 5 mmol/g of sorption volume chelating centers, the preferred content is from 3 to 4 mmol/g of sorption volume chelating centers. The conformationally advantageous and ordered arrangement of carboxyl groups and amino-containing chains, and hence the organized arrangement of carboxyl and amino groups, contributes to the formation of open and accessible for complexation with heavy metals volume chelating centers. Chelating centers are formed between the outer layer of the gel and / or the inner layer of the gel, and / or on the surface of the central shaft and / or inside the central shaft of one filament and / or adjacent filaments. As a result of the two-layer structure of the filaments and the multi-tiered arrangement of chelating functional groups, the matrix is a strong anion and cation exchange sorbent with formed chelate centers capable of sorbing heavy metal ions.

Figure 1a shows the structure of the sorbent from filaments with an outer ion-exchange layer of intermolecular amide crosslinked three-dimensional structures of carboxy-N,N'-polyacrylamido-N,N'-di(iminoethane), which contains repeating sorption volume chelating centers of two amino groups and one carboxyl group. It is obvious from figure 1a that prepared and open for complexation with heavy metal ions volume chelating centers formed in the structure of the sorbent. The figure shows only some examples of the formation of chelating centers.

A consequence of the sorbent structure described above is its high sorption and exchange capacities, a limited degree of swelling in protic and aprotic solvents, and also selectivity for heavy metal ions in the presence of calcium and magnesium. The characteristics of the claimed sorbent are presented in Table 2.

**Table 2. Characteristics of the sorbent according to the invention**

| Characteristics | Quantity |
|---|---|
| The content of anion exchange groups, mmol/g | 4.0 - 11.0 |
| The content of cation exchange groups, mmol/g | 0.5 - 5.0 |
| Total exchange capacity, mmol/g | 4.5 - 16 |
| The ratio of amino groups to carboxyl | 3:1 - 6:1 |
| Swelling in water, % | 80 - 100 |
| Swelling in 0.1 M NaOH, % | 90 - 130 |
| Swelling in 0.1 M HCl, % | 110 - 120 |
| Swelling in DMSO, % | 75 - 80 |
| CE for Cu (II), mmol/g | 3.3 - 4.8 (pH 6.5 - 7.0) |
| CE for Cr (VI), mmol/g | 4.5 - 6.5 (pH 6.5 - 7.0) |
| | 9.0 - 13.0 (pH 3.5 - 4.5) |
| CE for Pb (II), mmol/g | 1.55 - 1.85 (pH 6.5 - 7.0) |
| CE for As (V), mmol/g | 0.35 (pH 6.5 - 7.0) |
| Selectivity coefficient of copper Cu (II) / calcium Ca (II) in 100-fold excess of calcium | 10⁴ - 10⁵ |
| Selectivity coefficient of lead Pb (II) / calcium Ca (II) in 100-fold excess of calcium | 10³ - 10⁴ |

The fibrous sorbent is intended for use in water purification systems and water solutions, for example, for drinking water and wastewater purification, in the systems of flow-injection concentration for analytical chemistry, in chemical sensors.

When using the sorbent in water purification systems, the sorbent is placed in a filter housing, for example, in a filter cartridge, after which initial raw water containing impurities of heavy metals, for example, chromium Cr (III) and Cr (VI), copper Cu (II) manganese Mn (II), iron Fe (II), cobalt Co (II), nickel Ni (II), zinc Zn (II), lead Pb (II), cadmium Cd (II), mercury Hg (I) and Hg (II), aluminum Al (III), cerium Ce (IV), thallium Tl (I), arsenic As (V), selenium Se (IV) and Se (VI), perchlorate ion ClO₄⁻, cyanide ion CN⁻ and others, as well as calcium ions Ca²⁺ and magnesium Mg²⁺ is passed through it. Untreated water passes through the sorbent under dynamic conditions - by gravity flow or under external pressure. The sorbent swells upon contact with water, it swells, while the degree of swelling is not more than 100%. The reduced swelling in water is facilitated by the crosslinked structure of the filaments and the sorbent as a whole, as well as the presence of a strong central rod in the structure of the filament. Simultaneously with the sorbent swelling, volume chelating centers of filaments are activated, after which complexation of heavy metal cations with chelating centers occurs. Sorption of heavy metal cations occurs instantly, which is caused by chelating centers formed in the structure of the sorbent, regularly located in the filament structure. One carboxyl group and any two, located in close proximity, primary and / or secondary amino groups that composing the chelating center bind to the metal cation in a strong polycyclic chelating complex. Due to the two-layer structure of the sorbent filaments and the multi-tiered arrangement of volume chelating centers, chelating complexes with metal ions are formed on the outer surface of the ion-exchange filament layer and / or inside the ion-exchange layer, and / or on the surface of the central shaft, and / or inside the central shaft, and / or between them fibers and / or neighboring fibers. In this regard, in the structure of the sorbent, it becomes capable to form an infinite set of chelating complexes. The high content of chelating centers and the binding force with the metal cation inside the chelating complexes determine the stability of the sorbent especially under conditions of dynamic sorption, and exclude the occurrence of desorption of sorbed metal cations from the sorbent into purified water, for example, when the sorbent is oversaturated with sorbed heavy metal ions. Simultaneously with the sorption of metal cations and the formation of chelating complexes with them, the sorption of metal anions occurs. Sorption of anions is carried out by electrostatic interaction with the amino groups of the N-{2-[(2-aminoethyl)amino]ethyl}-polyacrylamide and N,N-bis(2-aminoethyl)-polyacrylamide units. In this case, calcium ions Ca²⁺ and magnesium ions Mg²⁺ are not sorbed by the sorbent, providing selective extraction of toxic impurities of heavy metals from water while preservation the general mineralization of water. The filtering cartridge outlet water, containing the claimed sorbent, is purified from heavy metal ions and at the same time contains the same amount of calcium Ca²⁺ and magnesium Mg²⁺ ions, which was contained in the raw untreated water before filtration.

Figure 1b shows the structure of the sorbent with copper ions sorbed by volume chelating centers. Figure 1b shows that chelating complexes with copper ions are formed between the carboxyl group and two primary amino groups of N,N-bis(2-aminoethyl)-polyacrylamide, between the carboxyl group, one primary, and one secondary amino group of N-{2-[(2-aminoethyl)amino]ethyl}-polyacrylamide and between the carboxyl group and two secondary amino groups of carboxy-N,N'-polyacrylamido-N,N'-di(iminoethane). The figure shows only some examples of the formation of chelating complexes.

The method of producing the sorbent consists in modifying PAN fiber with aliphatic di-, oligo-, or polyamine in a mixture of protic and aprotic solvents, followed by processing the PAN-fiber with a solution of sodium hydroxide and / or sodium carbonate. The quantity of aprotic solvent can be from 0 to 5 % by weight of the proton solvent.

Obtaining the sorbent can be carried out in one or several stages with a total duration of from 100 to 300 minutes.

A fiber based on acrylonitrile copolymers with a content of polyacrylonitrile units of at least 80% and a unit fiber thickness of 0.2 to 20 µm can be used as PAN fiber.

Any aliphatic di-, oligo- or polyamine, for example, EDA, DETA, TEPA or polyethyleneimine can be used as PAN fiber modifier.

Dimethylformamide, DMSO or dimethylacetamide can be used as an aprotic solvent.

Any polyhydric alcohol can be used, for example glycerol, propylene glycol or a mixture of polyhydric alcohol with water can be used as a protic solvent.

The solution of hydroxide and / or sodium carbonate may be aqueous, hydroalcoholic or alcoholic.

By a process of a PAN fiber modification, for example, DETA in a mixture, for example glycerol with DMSO, PAN fiber swells under the influence of DMSO, followed by the formation of amino-containing units of N-{2-[(2-aminoethyl)amino]ethyl}-polyacrylamide and N,N-bis(2-aminoethyl)-polyacrylamide. During the interaction of PAN fiber with DMSO in the glycerol medium, a partial shredding of the outer layer of the fiber occurs, which additionally opens the access of DETA as a source of amino groups to the nitrile groups of the PAN fiber. In this case, the conversion depth of the nitrile groups of the PAN fiber is at least 50%. Thus, filaments with an external gel-like ion-exchange layer consisting of a modified PAN, and a central shaft in the form of the initial, unreacted PAN are formed. At this stage, the gel-like layer consists of N-{2-[(2-aminoethyl)amino]ethyl}-polyacrylamide and N,N-bis(2-aminoethyl)-polyacrylamide units. In the interaction of the obtained intermediate product, for example, with an aqueous solution of sodium hydroxide, carboxyl groups are formed both in the ion-exchange layer and on the surface of the filament shaft. At the same time, intermolecular covalent amide crosslinks are formed between the individual terminal primary amino groups of the units and the carboxyl groups of the filament macromolecules. Amino groups and carboxyl groups may be located inside and / or on the surface of the ion exchange layer. Through this process, three-dimensional structures of carboxy-N,N'-polyacrylamido-N,N'-di(iminoethane) interconnected by intermolecular amide crosslinking are formed. In this case, from 30 to 80 % of N-{2-[(2-aminoethyl)amino]ethyl}-polyacrylamide and N,N-bis(2-aminoethyl)-polyacrylamide and carboxyl groups are in a free form and generate chelating centers. Another part of the units and carboxyl groups is linked by covalent intermolecular amide crosslinking. At the same time with the formation of three-dimensional structures of carboxy-N,N'-polyacrylamido-N,N'-di(iminoethane), organized volumetric chelating centers are formed on them, consisting of two amino groups and one carboxyl group. Chelating centers are formed by both the amino groups of the N-{2-[(2-aminoethyl)amino]ethyl}-polyacrylamide and N,N-bis(2-aminoethyl)-polyacrylamide units, and the amino groups of the three-dimensional structures of carboxy-N,N'-polyacrylamido-N,N'-di(iminoethane) with carboxyl groups. As a result of the method described above, the sorbent, which is a polymer matrix of filaments consisting of an outer ion-exchange layer of intermolecular amide crosslinked three-dimensional structures of carboxy-N,N'-polyacrylamido-N,N'-di(iminoethane), the proportion of which is not less than 50% and not more than 90% of the total filament mass and which contain repeated sorption volume chelating centers of two amino groups and one carboxyl group is obtained.

Below there are some examples of the sorbent obtained by the method described above.

### Example 1

The basis is PAN fiber from a copolymer of acrylonitrile (87.1%) and vinyl acetate (12.9%), 13 µm thick, modified with DETA in glycerol medium in the presence of sodium hydroxide NaOH.

Characteristics of the sorbent:
The content of carboxy-N,N'-polyacrylamido-N,N'-di(iminoethane) is 70% by weight of the filament.
The content of sorption chelating centers is 3.5 mmol/g;
COE_{HCl} - 7.6 mmol/g;
COE_{NaOH} - 2.2 mmol/g;
CE for Cu (II) - 3.8 mmol/g;
CE for Pb (II) - 1.65 mmol/g;
CE for Cr (VI) - 4.8 mmol/g (pH 6.5 - 7.0); 9.2 mmol/g (pH 3.5 - 4.5);
The separation coefficients during sorption of copper ions Cu (II) and lead Pb (II) against the background of a 100-fold excess of calcium: K Cu/Ca = 10⁴, K Pb/Ca = 10³.

### Example 2

The basis is PAN fiber from a copolymer of acrylonitrile (85%) and vinyl acetate (15%), 15 µm thick, modified with TETA in propylene glycol and DMSO in the presence of sodium carbonate.

Characteristics of the sorbent:
The content of carboxy-N,N'-polyacrylamido-N,N'-di(iminoethane) is 80% by weight of the filament.
The content of sorption chelating centers is 4.3 mmol/g;
COE_{HCl} - 9.2 mmol/g;
COE_{NaOH} - 2.5 mmol/g;
CE for Cu (II) - 4.6 mmol/g;
CE for Pb (II) - 1.70 mmol/g;
CE for Cr (VI) - 5.2 mmol/g (pH 6.5 - 7.0); 10.8 mmol/g (pH 3.5 - 4.5);
The separation coefficients during sorption of copper ions Cu (II) and lead Pb (II) against the background of a hundred-fold excess of calcium: K Cu/Ca = 10⁵, K Pb/Ca = 10⁴.

### Example 3

The basis is PAN fiber made from a copolymer of acrylonitrile (90%) with vinyl acetate (10%), 11 µm thick, modified with polyethyleneimine in propylene glycol and DMSO.

Characteristics of the sorbent:
The content of carboxy-N,N'-polyacrylamido-N,N'-di(iminoethane) is 90% by weight of the filament.
The content of sorption chelating centers is 5 mmol/g;
COE_{HCl} - 11.0 mmol/g;
COE_{NaOH} - 3.7 mmol/g;
CE for Cu (II) - 4.8 mmol/g;
CE for Pb (II) - 1.80 mmol/g;
CE for Cr (VI) - 6.5 mmol/g (pH 6.5 - 7.0); 12.1 mmol/g (pH 3.5 - 4.5);
CE for As (V) - 0.35 mmol/g;
The separation coefficients during sorption of copper ions Cu (II) and lead Pb (II) against the background of a hundred-fold excess of calcium: K Cu/Ca = 10⁵, K Pb/Ca = 10⁴.

Compared with sorbents known in the state of art, including with the closest analogue RU Patent No. 2194809, the claimed sorbent is characterized by a high content of both an anion-exchange and a cation-exchange groups. The sorbent is characterized by high rates of sorption activity both to cations and to metal anions, and is a strong anion and cation exchanger. Based on the data given in the state of art, CE for Cr (VI) of the claimed sorbent exceeds the CE for Cr (VI) of the closest analogue in 2 times. CE of the closest analogue was determined at low pH values between 3.5 - 4.5 and CE for Cr (VI) is not more than 344 mg/g (or 6.6 mmol/g). A person skilled in the art knows the direct dependence of sorption on water pH level, that is, the highest CE values that sorbent show in an acidic media at low pH values, and with pH increasing to normal conditions (in this case, drinking water conditions, pH 6.5 - 7.0) the sorption ability of the sorbent decreases sharply. CE of the claimed sorbent was studied under standard drinking water conditions (pH 6.5 - 7.0) and CE for Cr (VI) is from 4.5 to 6.5 mmol/g. When studying CE of the claimed sorbent under acidic water conditions pH 3.5 - 4.5, CE for Cr (VI) is from 500 to 700 mg/g (or from 9 to 13 mmol/g). In addition, as can be seen from table 2, the sorbent, in contrast to analogues, has the ability to sorb arsenic As (V) ions. In contrast to the sorbents known in the state of art, including the closest analogue, the sorption of heavy metal ions is carried out by chelating centers with the formation of strong multidentate chelating complexes with metal ions. Moreover, sorbents known in the state of art sorb ions by forming ionic or coordination bonds between the ion and the carboxyl group or amino group, respectively. It is known that ionic and coordination bonds are weak and easily decomposed. The rupture of such bonds can be triggered by supersaturation of the sorbent by ions, the use of the sorbent under dynamic sorption conditions (in water treatment systems), swelling, shredding and wearing of the sorbent. This leads to desorption and carry-over ions from the sorbent phase and the transition to the phase of purified water. Chelating complexes formed during the sorption of metal ions by the claimed sorbent are characterized by high stability and strength of bonds within the complex. Therefore, the possibility of bonds rupture inside the chelating complex and the possibility of ions desorption from the sorbent phase to the phase of the purified liquid is excluded in the claimed sorbent. In addition, the chelating centers of the sorbent are characterized by a high rate of complexation with the metal ion - the formation of chelating complexes, that is, when water enters the sorbent, the heavy metal ion is instantly bound to the chelating center. Also, the sorbent differs from existing analogues in that all the carboxyl and amino groups of the sorbent form open and accessible to complexation with metal ions organized chelate centers of the sorbent. In the structure of the sorbent, it becomes possible to form an infinitely large number of chelating complexes. The high content and regular arrangement of chelating centers on each filament of the sorbent provides high sorption of metal ions. The above advantages over sorbents known in the prior art, including the closest analogue, eliminate the risk of an ion leakage under conditions of dynamic filtration through a sorbent layer into purified water and, as a result, uncontrolled entry of heavy metal ions into purified water. And also allow to use the claimed sorbent in conditions of increased pollution by ions of heavy metals, both in the form of cations and in the form of anions of metals.

Moreover, the sorbent selectively sorbs heavy metals against the background of an excess of calcium Ca²⁺ and magnesium Mg²⁺ ions, which have a beneficial effect on the quality drinking water, due to the high content of chelating centers in the sorbent filaments, the regular arrangement of functional groups in combination with a certain and equal length of amino-containing chains forming the inner sphere of the chelate. This is achieved by the chelating centers are not able to form bonds with cations Ca²⁺ and magnesium Mg²⁺. As can be seen from the above examples of the claimed sorbent, the separation coefficients during sorption of copper Cu (II) and lead Pb (II) ions against the background of a 100-fold excess of calcium are K Cu/ Ca = 10⁴ - 10⁵ and K Pb/Ca = 10³ - 10⁴. The sorbent of the closest analogue, according to the data and characteristics given in the patent, does not have selective sorption to calcium Ca²⁺ and magnesium Mg²⁺ ions. Therefore, the use of the sorbent according to RU Patent No. 2194809 is undesirable for drinking water, since water without any useful minerals, such as calcium and magnesium, adversely affects the human body.

In addition, the sorbent compared to the closest analogue according to RU Patent No. 2194809, has a crosslinked structure and a two-layer structure of filaments, hardened by an inner shaft made of PAN. Due to this, the sorbent is characterized by a distinctive low degree of swelling in protic and aprotic solvents. The sorbent filaments and the sorbent as a whole are elastic and strength. Due to these properties, there is no risk of stratification and caking of the sorbent during swelling in a water. Therefore, there is no probability of uncontrolled slip of metal ions through the sorbent layer into purified water, as well as the occurrence of channel effects that lead to the passage of water through the sorbent layer in the absence of sorption of metal ions by the sorbent, followed by entering of metal ions to a purified water. In this regard, the sorbent with the claimed characteristics can be used in dynamic sorption conditions, including in flow water treatment systems.

To top it all off, the sorbent is characterized by high stability. Under sorption conditions, when the sorbent is oversaturated with metal ions, the probability of ions desorption from the sorbent and intrusion of these heavy metal ions into purified water are excluded. The sorbent chelating complexes with metal ions are strong and indestructible over time using the sorbent.

Thus, in contrast to the fibrous polyampholytic sorbents known in the state of art, the claimed sorbent combines at the same time high sorption abilities for metal cations and anions, stability and structural strength, reduced swelling in protic and aprotic solvents, selectivity for sorption of heavy metals against the background of excess calcium and magnesium ions, and is also characterized by a high rate of sorption of heavy metal ions.

The description of the present invention submits a preferred embodiment of the invention. It can be changed within the claimed set of the claims, so the wide use of the invention is possible.

## Claims

1. Fibrous polyampholytic sorbent based on PAN, modified with an aliphatic di-, oligo- or polyamine, ***characterized in* that** said sorbent is a polymer matrix of filaments with an outer ion-exchange layer of interlinked amide cross-links of three-dimensional carboxy-N,N'-polyacrylamido-N,N'-di(iminoethane) structures, the proportion of which is not less than 50% and not more than 90% of the total mass of the filament and which contains repeated sorption volume chelating centers from two amino groups and one carboxyl group.

2. The sorbent according to claim 1, **characterized in that** the ion exchange layer contains from 2 to 5 mmol/g of sorption volume chelating centers.

3. The sorbent according to claim 1, **characterized in that** the content of anion exchange groups is from 4 to 11 mmol/g.

4. The sorbent according to claim 1, **characterized in that** the content of free cation exchange groups is from 0.5 to 5.0 mmol/g.

5. The sorbent according to claim 1, **characterized in that** the ratio of amino groups to carboxyl groups is not less than 3 : 1.

6. The sorbent according to claim 1, **characterized in that** the ratio of amino groups to carboxyl groups is not more than 6 : 1.
